# FASCICULE DE BREVET EUROPEEN

(11) **EP 2 536 289 B1**
(45) Date de publication et mention de la délivrance du brevet: **05.06.2019**
(21) Numéro de dépôt: 11709986.1
(22) Date de dépôt: 15.02.2011
(51) Int. Cl.: A21D 8/02, A21B 7/00, A21C 1/00, A21C 11/14

(54) **PROCEDE ET INSTALLATIONS DE BOULANGERIE**
BACKVERFAHREN UND BACKANLAGE
BAKERY PROCESS AND BAKERY SYSTEM

(30) Priorité: 16.02.2010 FR 1000631
(43) Date de publication de la demande: 26.12.2012
(73) Titulaire: Loiselet, Michel, 12490 Montjaux (FR)
(72) Inventeur: Loiselet, Michel, 12490 Montjaux (FR)
(74) Mandataire: Henck, Lilian
(86) Numéro de dépôt international: PCT/FR2011/000089
(87) Numéro de publication internationale: WO 2011/101556

(56) Documents cités:
- EP-A2- 0 358 455
- WO-A1-2004/047926
- WO-A1-2005/063026
- FR-A1- 2 640 470
- FR-A1- 2 709 045
- GB-A- 2 468 114
- US-A- 2 215 957
- US-A- 2 869 484
- US-A- 4 207 346
- US-A1- 2004 191 362
- US-A1- 2006 233 935
- US-A1- 2008 274 231

## Description

La présente invention concerne, d'une façon générale, un procédé de transformation d'une substance pâteuse en produit fini alimentaire.

L'état de la technique présente des procédés de transformation d'une substance pâteuse en produit fini alimentaire.

US 2 869 484 A décrit un procédé pour la préparation de pain comprenant une étape de travail mécanique de la pâte, une étape de fermentation de la pâte, une étape de travail mécanique avant division et cuisson.

US 2 215 957 A décrit un procédé de préparation d'un produit de boulangerie comprenant les étapes de: mélanger les ingrédients pour former une pâte (farine, eau, levure et autres ingrédients comprenant un agent oxydant), fermentation de la pâte, à nouveau mélange avant division, moulage, fermentation des pâtons et cuisson.

EP 0 358 455 A2 décrit un procédé de préparation de crackers comprenant les étapes de: mélange des ingrédients pour former une pâte, fermentation de la pâte, second mélange de la pâte et éventuellement seconde fermentation avant division et cuisson.

US 4 207 346 A décrit un procédé pour la préparation de pain comprenant une étape de travail mécanique de la pâte (mélange des ingrédients à une température de 78-82 °F), une étape de repos de la pâte (une heure à température ambiante), une étape de travail mécanique (remixing or reworking) avant division, éventuellement fermentation et cuisson. - L'exemple 5 de WO 2004/047926 A1 décrit un procédé pour la préparation de pain aux 5 céréales comprenant une étape de travail mécanique de la pâte (mélange des ingrédients: 4 minutes à la première vitesse et 5 minutes à la second vitesse), une étape de fermentation de la pâte (60 min à 22-24°C), une étape de travail mécanique avant division et cuisson.

L'exemple 6 de US 2008/274231 A1 décrit un procédé pour la préparation de petits pains comprenant: une étape de travail mécanique de la pâte (mélange des ingrédients: 2 minutes à faible vitesse et 7 minutes à grande vitesse), une étape de repos de la pâte (15 min à 25°C), une étape de travail de la pâte, une étape de repos de la pâte (10 min à 25°C), une étape de pré-division de la pâte (pré-pâtons de 2kg), une étape de repos des pré-pâtons, une étape de division en pâtons de 66g, une étape de repos des pâtons (5 min à 25°C) avant une étape de fermentation finale (70 min à 25°C) et cuisson.

L'exemple 13 de US 2004/191362 A1 décrit un procédé pour la préparation de pain comprenant une étape de travail mécanique de la pâte (mélange des ingrédients), une étape de fermentation de la pâte (90 min), une seconde étape de travail mécanique (remixing) avant division et cuisson.

L'exemple 4 de WO 2005/063026 A1 décrit un procédé pour la préparation de pain comprenant une étape de travail mécanique de la pâte (mélange des ingrédients 5 min. à vitesse I et 5 min. à vitesse II), une étape de fermentation de la pâte (30 min.), une seconde étape de travail mécanique (remixing 2 min.) avant division en pâtons, fermentation des pâtons, cuisson, refroidissement pendant 2-3 heures et emballage.

FR 2 640 470 A1 décrit la préparation de pain comprenant les étapes de: pétrissage d'un premier mélange (comprenant au moins les ingrédients (A) suivants: de la farine, de l'eau, du sel et de la levure), fermentation en masse, incorporation d'un second mélange comprenant les ingrédients (A) à la pâte ainsi que des oeufs et de la margarine, second pétrissage second fermentation avant division en pâtons, boulage des pâtons et cuisson.

FR 2 709 045 A1 décrit un procédé de fabrication d'un pain comprenant les étapes de: mélange des ingrédients, pétrissage, pointage en cuve et dégazage, pesage, mise de la pâte dans les moules, pointage en moules et cuisson.

Plus particulièrement, la présente invention concerne un procédé de transformation de la substance pâteuse, selon la revendication 1, où l'étape de travail mécanique de ladite substance et son étape de fermentation sont particulièrement optimisées.

Ce procédé peut servir à la préparation de pâtes à base de farine et dans ce qui suit, il va être pris comme exemple l'élaboration de pâtons destinés à la fabrication du pain. Il est à garder à l'esprit que cet exemple n'est pas limitatif.

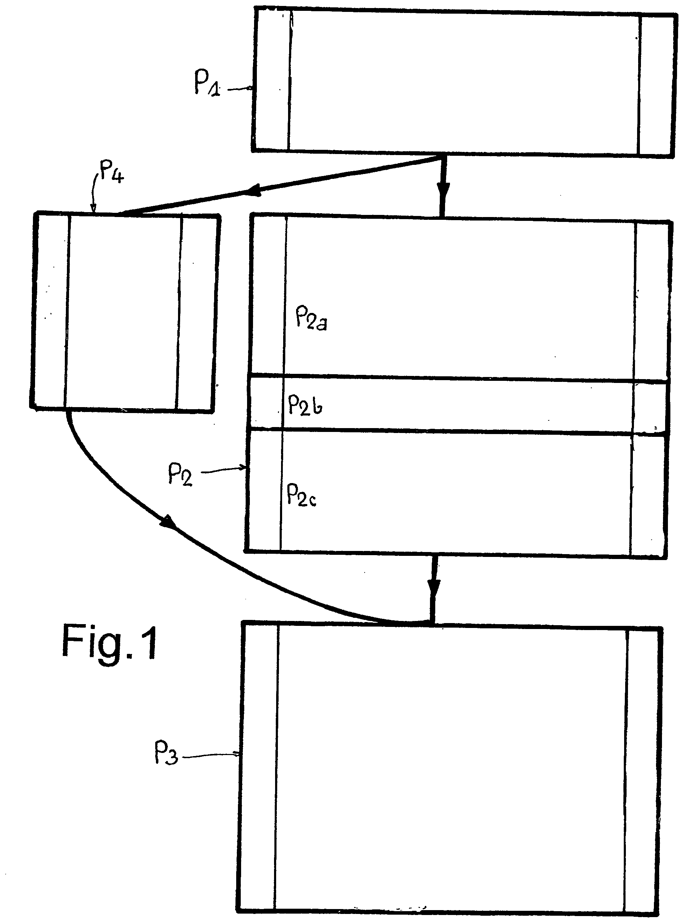

Un procédé de transformation d'une substance pâteuse en produit fini dans un atelier comprend typiquement les étapes suivantes qui vont être décrites en se référant à la figure 1.

La première étape P1 concerne le stockage des produits nécessaires à l'élaboration du produit fini par exemple, pour la fabrication de pain dans un fournil, le stockage de farine de plusieurs types, d'adjuvants divers utiles lors d'étapes ultérieures du procédé et notamment de l'eau filtrée et refroidie. Pour un fonctionnement optimal du procédé de transformation, les divers éléments stockés lors de l'étape P1 doivent être maintenus à des températures et à des degrés d'hygrométrie spécifiques pour leur conservation et/ou leur utilisation, notamment quand ils vont exercer un rôle de refroidissement de la substance pâteuse lors d'une étape ultérieure du procédé.

Le second groupe P2 d'étapes concerne le travail de la substance pâteuse et concerne sa transformation progressive en sous-produit apte à la cuisson. Ce second groupe P2 d'étapes comprend des étapes respectives P2a, P2b et P2c.

La première étape P2a du second groupe P2 concerne essentiellement le mélange des ingrédients de la substance pâteuse et son traitement mécanique par brassage. Cette première étape P2a se compose principalement d'une opération de pétrissage de la substance pâteuse. Il est connu d'effectuer l'opération de pétrissage en plaçant la substance pâteuse dans une cuve d'un dispositif de travail de la substance pâteuse et de la travailler à l'aide d'au moins un outil de travail effectuant une action de malaxage de cette substance pâteuse, avant selon un principe connu, d'être ultérieurement divisée en pâtons par une diviseuse.

Avant cette division, la substance pâteuse ainsi malaxée est placée dans une chambre de fermentation. Il est avantageux d'ajouter des éléments d'apport dits de valorisation, par exemple d'introduire un gaz ou de l'eau sous forme de buée, avantageusement contenant des constituants ajoutés, notamment des ions négatifs ajoutés à ce gaz.

Le document FR 2 867 658 illustre un apport de gaz de valorisation ayant lieu durant cette étape. Un tel apport présente de très nombreux avantages concernant principalement la qualité du produit fini.

L'étape P2b suivante du second groupe P2 consiste à diviser la substance pâteuse en pâtons et à placer les pâtons préformés dans au moins une chambre de conservation, de régulation de débits et apprêt.

Par exemple, il est connu des fournils dits du type à fermentation contrôlée avec au moins une chambre de conservation contenant des pâtons préformés sur plaques et échelles à roulettes qui permettent de mieux réguler les productions. A ces chambres de conservation peuvent être adjoints les équipements suivants: un refroidisseur d'eau, un pétrin à décuvage manuel ou par élévation suivie d'un basculement, une peseuse et/ou diviseuse et un dispositif de repos des pâtons en balancelles ou en groupe très volumineux pour assurer leur boulage et leur façonnage.

L'étape P2c suivante du second groupe P2 est la sortie des pâtons de la chambre de conservation et d'apprêt pour scarification suivie de leur enfournement dans un four boulanger ou de cuisine à fort volant thermique pour leur cuisson finale. Ce four peut comprendre avantageusement au moins une sole de cuisson. L'étape P2c comprend après la cuisson un ressuage et un stockage temporaire des produits finis élaborés.

En fournil boulanger, il existe plusieurs types de fours, dont des fours rotatifs compacts avec des chariots de cuisson portant des soles métalliques, ceci avec des résultats moyens, ces soles étant parfois recouvertes de matériau réfractaire, cela pour de meilleurs résultats mais ce qui les rend lourdes, onéreuses et à dispersion de chaleur lente. Par exemple, un type de four existant comprend au moins une sole tournante en matériau réfractaire avec une voûte également en matériau réfractaire, l'ensemble étant lourd et ne pouvant cuire en chaleur descendante. Il existe aussi un four à étages à soles en matériau réfractaire, ce four étant efficace mais lourd et encombrant. Ces différents types de four peuvent parfois cuire en chaleur descendante aussi bien en automatique, en semi-automatique ou qu'en manuel.

La dernière étape P3 du procédé de transformation de substances pâteuses en produits finis est la vente des produits finis aux clients. Cette étape se tient dans un local propice à la vente et adapté à la conservation des produits finis. Ce local peut ou non être contiguë aux autres locaux servant respectivement à une étape spécifique précédemment mentionnée du procédé et, quand ceci est le cas, il est avantageux que des senteurs agréables de cuisson pénètrent dans ce local.

En parallèle à cette succession d'étapes, il peut exister une étape P4 de transformation de produits dérivés du produit fini principal, par exemple dans le domaine de la fabrication du pain une étape de fabrication de pâtisseries, le local destiné à une telle fabrication pouvant aussi recevoir des dispositifs de lavage des divers ustensiles utilisés pendant toutes les étapes P1, P2 et P4. Un tel local est aussi relié au locale de vente selon l'étape P3 du procédé précédemment mentionné.

Il a été constaté que, lors des étapes de travail mécanique et de fermentation de la pâte, d'une part, et lors de l'étape de cuisson, d'autre part, il n'est pas possible d'entreprendre les traitements diversifiés de la substance pâteuse qui amélioreraient encore la qualité du produit fini ou, particulièrement pour la cuisson, le moyen de traitement de la substance pâteuse se révèle d'un rendement moyen avec des problèmes d'acheminement de la substance pâteuse d'une station de travail à une autre. Il conviendrait aussi, par exemple, de prendre en compte les conditions ambiantes régnant dans le local de l'atelier où a lieu une de ces étapes, notamment la température et/ou l'hygrométrie régnant dans ce local. D'autres paramètres comme la vitesse de l'action des outils de pétrissage, la durée des pétrissages ou des fermentations et, le cas échéant, la nature du gaz de valorisation ajouté avec la concentration d'ions négatifs possiblement contenus dans ce gaz ont aussi une influence sur la qualité du produit fini, notamment lors de la relance fermentaire en masse.

Selon l'état de la technique précédemment décrit, des fermentations successives en pétrin ne sont pas envisageables étant donné qu'elles limiteraient la production en fournil boulanger par manque de place ou par difficulté de mise en oeuvre en nécessitant trop de manipulation des différents dispositifs utilisés pour la mise en oeuvre de chaque étape du procédé précédemment décrit et du fait de la variation des paramètres de travail.

Ainsi, pour ordre d'idée, la température pendant la phase fermentaire est avantageusement régulée entre 8 et 23°C et pendant l'étape P2b de conservation, de régulation et d'apprêt la température est à réguler entre 3 et 30°C avec des durées de traitement pendant les étapes dépendant essentiellement de la température de la substance pâteuse.

Par exemple, les fermentations lentes à 12°C ont aujourd'hui la préférence des hommes de l'art que sont les artisans boulangers afin de bénéficier d'une production parfaitement régulée sur une journée avec un personnel travaillant de jour.

Il a aussi été constaté que la division en pâtons suite au pétrissage prend beaucoup de place et ne permet pas d'effectuer des fermentations successives avec rafraîchis.

Le document FR 2 870 676 décrit un fournil avec local de préparation des pâteux climatisé pour un travail de jour à 23°C avec un pourcentage d'humidité de 55% et un travail de nuit à 12°C et 75% d'humidité pour la fermentation lente et la production de levain pâteux. Ce type de fournil est évolutif afin d'assurer une production de qualité étalée sur 24 heures avec un travail de jour du personnel.

Il est fréquent aussi que l'atelier de transformation d'une substance pâteuse, celui-ci pouvant être un fournil, soit composé de différents locaux peu rationnels et mal distribués et sans maîtrise des paramètres ambiants comme la température par local avec un circuit de transport complexe nécessitant des machines de transport onéreuses et encombrantes telles qu'élévateur basculeur, peseuse volumétrique, groupe de balancelles avec bouleuse et façonneuse, les principes de production étant basés sur la division de la substance pâteuse à la sortie du pétrin sans fermentations successives avec rafraîchis, les pâtons divisés pour fermentation avec rafraîchis prenant beaucoup de place et nécessitant une peseuse volumétrique et une balancelle, équipements très onéreux et prenant aussi beaucoup de place.

De plus, quand les paramètres régnant à l'intérieur d'un local de l'atelier, par exemple sa température ou son hygrométrie, son éclairage sont variables, la pression atmosphérique et l'hygrométrie extérieure jouant aussi un rôle, il est difficile d'automatiser le procédé de transformation du produit fini, notamment par le contrôle des durées de travail de la substance pâteuse ou des pâtons, par exemple la durée d'une seule fermentation en cuve, étant donné que les conditions opérationnelles varient. De plus, une seule fermentation sans rafraîchi limite la formation de micro-organismes aromatiques, ce qui nuît à la qualité du produit fini.

La présente invention a pour objet de concevoir un procédé de transformation d'un produit alimentaire à partir d'une substance pâteuse à travailler et à cuire qui tienne compte des derniers progrès dans les étapes de fermentation et de travail mécanique.

A cet effet, l'invention concerne un procédé de transformation d'une substance pâteuse en produit fini alimentaire, selon la revendication 1.

Avantageusement, lors de la fermentation il est opéré une phase de dégazage du gaz carbonique et/ou une phase d'injection de gaz valorisateurs, ces phases étant opérées avantageusement séquentiellement.

Avantageusement, entre les étapes de pré-division et de division, d'une part, et l'étape de cuisson, d'autre part, sont intercalées une étape de scarification des pâtons ainsi obtenus et une étape de conservation, régulation des débits et d'apprêt desdits pâtons, et après l'étape de cuisson prend place une étape de ressuage.

Avantageusement, il est procédé à une régulation, lors des étapes de travail mécanique et de fermentation, d'au moins un paramètre d'ambiance des moyens de réception contenant la substance pâteuse comme la température, l'hygrométrie, un paramètre d'émission d'une onde électromagnétique, notamment la luminosité ou l'ambiance acoustique, la pression et/ou la concentration d'un élément contenu dans l'atmosphère régnant dans ces moyens de réception, ceci, d'une part, selon au moins un paramètre de fonctionnement en vigueur dans les moyens de réception, comme la vitesse de moyens mécaniques lors des étapes de travail mécanique, la durée des étapes de travail mécanique et/ou des étapes de fermentation, le nombre de successions d'étapes de travail mécanique et de fermentation prévues ou la place d'une étape de travail mécanique ou de fermentation dans cette succession, l'alimentation séquentielle de gaz et le type de gaz utilisé et/ou, d'autre part, selon la pression atmosphérique ou l'hygrométrie régnant à l'extérieur, ou en ce qu'il est procédé à la régulation inverse d'au moins un desdits paramètres de fonctionnement par au moins un paramètre d'ambiance régnant dans les moyens de réception pendant les étapes de travail mécanique et de fermentation.

Avantageusement, le procédé est mis en oeuvre dans une installation se composant d'un premier dispositif pour le travail mécanique et la fermentation de la substance pâteuse et d'un second dispositif pour la cuisson de la substance pâteuse, les moyens de réception de la substance pâteuse du premier dispositif étant sous forme d'une cuve et ceux du second dispositif d'au moins une sole, caractérisée en ce qu'un outil pré-diviseur est associé au moins temporairement au premier dispositif.

Selon des caractéristiques additionnelles de la présente invention :
- le dispositif de cuisson coopère avec un dispositif de conservation, de régulation des débits et d'apprêt de la substance pâteuse.
- les moyens de déplacement sont sous la forme d'une échelle ou d'un chariot roulant portant au moins la cuve et/ou la sole.
- la cuve est celle d'un pétrin fermenteur, cette cuve étant amovible et pouvant être déplacée au moins entre travail mécanique et fermentation.
- soit le pétrin fermenteur ou un appareil auxiliaire pouvant coopérer avec ledit pétrin porte un outil pré-diviseur interchangeable, soit la cuve est recouverte d'un premier couvercle interchangeable, ce premier couvercle incorporant au moins un outil de travail pour le travail de la substance pâteuse en vue de sa fermentation et pouvant être remplacé par un second couvercle incorporant un outil pré-diviseur pour la pré-division de la substance pâteuse en pré-pâtons.
- le pétrin fermenteur porte simultanément les deux couvercles, l'un étant en position de travail sur l'ouverture de la cuve et l'autre en position d'attente en étant à un niveau supérieur au niveau de l'ouverture de la cuve et non superposé à ladite ouverture, les couvercles étant interchangeables par coulissement du couvercle en position de travail dans un plan perpendiculaire à l'ouverture de la cuve puis pivotement dudit couvercle dans un plan parallèle à l'ouverture de la cuve, l'autre couvercle le remplaçant par pivotement dans un plan parallèle à l'ouverture de la cuve et coulissement vers le bas le rapprochant de ladite ouverture afin de la recouvrir, au moins l'un des couvercles pouvant être désolidarisé dudit pétrin fermenteur afin de suivre la cuve dans son déplacement en position de recouvrement de son ouverture.
- la cuve peut être recouverte par un troisième couvercle, au moins par intermittence, ce troisième couvercle étant de faible poids et légèrement poreux pour respiration gazeuse tout en évitant le croûtage.
- au moins un gaz de valorisation tel que l'air, l'eau sous forme de buée, l'oxygène ou l'ozone, ou un mélange de ces gaz, ce gaz ou ce mélange étant avec ou sans ions négatifs ajoutés, est introduit dans la cuve pendant le travail mécanique et/ou la fermentation.
- le local de fermentation comprend au moins une chambre de fermentation, pour laquelle sa température, son hygrométrie et sa pression intérieure sont régulées selon une phase de dépression gazeuse pour l'évacuation du gaz carbonique hors de la chambre et/ou selon une phase d'injection en séquences du gaz de valorisation et/ou selon une phase sans ou avec brassage gazeux faible.
- le dispositif de cuisson comprend un four à cellule non tournante recevant un chariot ou une échelle amovible, au moins une sole chauffante étant, soit encastrée dans le four, soit porté par le chariot ou l'échelle dans ledit four, ladite sole étant à chauffage électrique ultrarapide pour le saisissement à environ 200°C des pâtons obtenus après division de la substance pâteuse fermentée, ledit chariot, ladite échelle ou la sole étant connecté électriquement lors de son insertion dans la cellule du four.
- le chauffage est automatisé et s'effectue selon un programme/recette sélectionné, ce chauffage étant avantageusement du type en chaleur descendante et pouvant être équipé d'un programme d'apprêt et de conservation par refroidissement.
- la sole du dispositif de cuisson se compose d'une matière à dispersion thermique élevée comme l'aluminium, le cuivre ou l'acier inoxydable, présente une faible épaisseur et intègre une résistance linéaire en couche épaisse avantageusement sérigraphiée avec un revêtement de protection genre quasi-cristaux ou similaire, ou une résistance par l'intermédiaire d'un film en couche mince avec un revêtement quasi-cristaux, ladite sole étant munie en sa partie supérieure porte pâtons d'un revêtement poreux permettant le dégazage, tel qu'une céramique poreuse, un hydroxyle apatite en couche mince, un émail ou un revêtement anti-adhérent et résistant à la chaleur tel que silicone, PTFE ou émail, ladite sole pouvant être munie ou non de micro perforations pour faciliter le dégazage des pâtons lors de leur cuisson.
- ladite sole est formée d'un réservoir à double peau doté d'un système de diffusion de buée.
- ladite sole présente des formes concaves de réception d'un pâton respectif, ces formes concaves pouvant présenter des configurations différentes selon le pâton à recevoir, chaque forme concave pouvant présenter au moins une forme saillante avantageusement coupante afin de pouvoir laisser une empreinte ou une marque qualitative sur le produit fini obtenu après cuisson du pâton, ladite sole comportant des éléments en bordure facilitant sa mise en place.
- le four du dispositif de cuisson est muni d'un système d'aromatisation par une essence diffusée par buée préalablement aromatisée ou aromatisée par contact avec une substance aromatique contenue dans le four, des effluves aromatisées se fixant sur les pains pendant leur cuisson, une partie des effluves étant ensuite évacuées à l'extérieur ou à l'intérieur de l'atelier pour attirer la clientèle.
- à la place du système d'aromatisation ou en complément de celui-ci est prévu un système de coloration des pâtons cuisants.
- la sole du dispositif de cuisson présente une portion de forme concave remplie d'une substance aromatique et/ou colorante et porte un bac, contenant des glaçons, le bac étant isolé thermiquement et en forme d'entonnoir avec son ouverture pointée vers ladite portion concave, l'eau des glaçons fondus s'écoulant au goutte à goutte sur ladite substance.
- le dispositif de cuisson comprend un four à sole tournante et à voûte fixe en matériaux réfractaires de préférence avec une voûte à hauteur différenciée en forme de colimaçon, avec une hauteur de voûte plus faible en entrée et progressivement plus haute en sortie afin de pouvoir cuire en chaleur descendante.
- le dispositif de cuisson forme un kit de cuisson pouvant être utilisé en cuisine domestique ou hôtelière.

L'effet technique, du fait de la succession alternée d'étapes de travail mécanique de la substance pâteuse avec étapes de fermentation de ladite substance, est l'obtention d'un procédé de transformation plus efficace.

Les figures annexées, qui ne font pas partie de l'invention, vont être décrites:
- la figure 1 est un schéma des différentes étapes d'un procédé de transformation d'une substance pâteuse en un produit alimentaire fini, certaines étapes de ce procédé étant connues de l'état de la technique mais une succession d'étapes de fermentation et d'étapes de travail mécanique ne l'étant pas,
- la figure 2 est une représentation schématique d'un plan d'un atelier de fournil boulanger de transformation d'une substance pâteuse en un produit fini alimentaire (cet atelier ne fait pas partie de l'invention),
- la figure 3 est une représentation schématique d'un plan des équipements prévus dans les locaux d'un atelier de fournil boulanger de transformation selon la figure 2 (cet atelier ne fait pas partie de l'invention),
- la figure 4 est une représentation schématique d'un plan d'un atelier de fournil boulanger de transformation d'une substance pâteuse en un produit fini alimentaire selon un second mode (cet atelier ne fait pas partie de l'invention),
- la figure 5 est une représentation schématique d'une coupe d'un bac à glaçons destiné à être incorporé à la sole d'un four du local de cuisson existant en cuisines, notamment dans une cuisine hôtelière ou domestique (ne fait pas partie de l'invention),
- la figure 6 est une représentation schématique d'une vue de dessus d'une sole présentant divers modèles de marques ou empreintes destinées à laisser des empreintes sur pâton culinaire (ne fait pas partie de l'invention),
- la figure 7 est une représentation schématique d'une vue de dessus d'une sole chauffante pour four, échelle ou chariot (ne fait pas partie de l'invention).

Dans ce qui va suivre, l'installation ou l'atelier de transformation d'une substance pâteuse en un produit alimentaire fini (installation et atelier ne faisant pas partie de l'invention) va être illustré principalement par divers types de machines actives dans le domaine de la fabrication du pain, notamment un pétrin. Il est entendu par pétrin une machine de transformation par travail mécanique d'une substance pâteuse, notamment mais pas uniquement de la pâte à pain. Il convient de préciser que cela n'a pas un caractère limitatif et que l'atelier en fournil ou la cuisine n'est pas limité à la fabrication du pain avec ou sans ingrédients ajoutés.

La figure 1 a déjà été partiellement détaillée dans la partie introductive de la présente demande.

Le demandeur a découvert qu'après la phase de malaxage par travail mécanique quand la substance pâteuse est mise en chambre de fermentation, il est possible de soumettre la substance pâteuse à une nouvelle phase de malaxage et ceci plusieurs fois de suite. Ceci est avantagé par un contrôle d'au moins un des paramètres ambiants de l'atelier ou de l'espace fermé où se déroule le travail mécanique ou la fermentation, contrôle qui sera ultérieurement mieux expliqué. Il est à tenir compte que ces paramètres ambiants régnant dans l'espace de malaxage ou dans l'espace de fermentation de même que les paramètres mécaniques peuvent différer entre une phase de malaxage par travail mécanique et une autre ou entre une phase de mise en chambre de fermentation et une autre.

A la fin de cette première étape de fermentations successives avec rafraîchis, la substance pâteuse est pré-divisée par un outil pré-diviseur dans la cuve du dispositif de travail, par exemple un pétrin fermenteur, pour l'obtention de pré-pâtons. La substance pâteuse, dans cet état, est ultérieurement généralement encore divisée par un outil diviseur, avantageusement une diviseuse hydraulique pour l'obtention de pâtons préformés avant leur mise sur chariot ou échelle à roulettes sur des plaque ou des soles. Les pâtons préformés ainsi traités peuvent avantageusement reposer sur des soles ou plaques ou filets en ayant des empreintes pour bénéficier de marques de valorisation. Les pré-pâtons peuvent aussi être soumis à des fermentations suivies de rafraîchis.

Une telle pré-division en pré-pâtons n'était pas connue de l'état de la technique pour lequel une division en pâtons était effectuée sans pré-division préalable, de même qu'une alternance d'opération de travail mécanique de la substance pâteuse suivie de la fermentation de la substance pâteuse, elle-même suivie d'un retravail mécanique de la substance.

Ainsi, un procédé de transformation d'une substance pâteuse en produit fini alimentaire, selon l'invention, comprend une étape de travail mécanique de la substance pâteuse, une étape de fermentation de ladite substance, les fermentations étant de préférence successives avec rafraîchis, une étape de division de la substance en pâtons suivie d'une étape de cuisson desdits pâtons. Il est caractérisé en ce qu'après une étape de fermentation la substance pâteuse est soumise à une nouvelle étape de travail mécanique de ladite substance, cette succession se produisant au moins une fois.

Avantageusement, lors de la fermentation, il est opéré une phase de dégazage du gaz carbonique et/ou une phase d'injection de gaz valorisateurs, ces phases étant opérées avantageusement séquentiellement.

Avantageusement, entre les étapes de pré-division et de division, d'une part, et l'étape de cuisson, d'autre part, sont intercalées une étape de scarification des pâtons ainsi obtenus et une étape de conservation, régulation des débits et d'apprêt desdits pâtons, et après l'étape de cuisson prend place une étape de ressuage.

Avantageusement, il est procédé à une régulation, lors des étapes de travail mécanique et de fermentation, d'au moins un paramètre d'ambiance des moyens de réception contenant la substance pâteuse comme la température, l'hygrométrie, un paramètre d'émission d'une onde électromagnétique, notamment la luminosité ou l'ambiance acoustique, la pression et/ou la concentration d'un élément contenu dans l'atmosphère régnant dans ces moyens de réception, ceci, d'une part, selon au moins un paramètre de fonctionnement en vigueur dans les moyens de réception, comme la vitesse de moyens mécaniques lors des étapes de travail mécanique, la durée des étapes de travail mécanique et/ou des étapes de fermentation, le nombre de successions d'étapes de travail mécanique et de fermentation prévues ou la place d'une étape de travail mécanique ou de fermentation dans cette succession, l'alimentation séquentielle de gaz et le type de gaz utilisé et/ou, d'autre part, en tenant compte de la pression atmosphérique et de l'hygrométrie régnant à l'extérieur des moyens de réception. Inversement, il est procédé à la régulation inverse, c'est-à-dire d'au moins un desdits paramètres de fonctionnement par au moins un paramètre d'ambiance régnant dans les moyens de réception pendant les étapes de travail mécanique et de fermentation.

A titre d'exemple non limitatif, dans le domaine de la préparation d'une pâte, un programme avec rafraîchi peut comprendre sur un temps court de deux à trois minutes les phases successives de dégazage du CO2, puis d'incorporation de gaz et d'adjuvants et de bassinage en vitesse lente avec relance fermentaire en pétrin ou en chambre de pousse, notamment pour les versions déjà existantes du marché à cuve sur chariot amovible. A cela peut être adjoint l'émission d'un signal sonore et/ou lumineux en correspondance avec la phase en vigueur à un moment donné. Pour l'alimentation séquentielle de gaz sous pression et d'adjuvants, le couvercle 1 de la cuve est avantageusement muni de buses de pulvérisation et/ou d'un éclairage.

Avantageusement, le procédé est mis en oeuvre dans une installation se composant d'un premier dispositif pour le travail mécanique et la fermentation de la substance pâteuse et d'un second dispositif pour la cuisson de la substance pâteuse, les moyens de réception de la substance pâteuse du premier dispositif étant sous forme d'une cuve et ceux du second dispositif d'au moins une sole, caractérisée en ce qu'un outil pré-diviseur est associé au moins temporairement au premier dispositif.

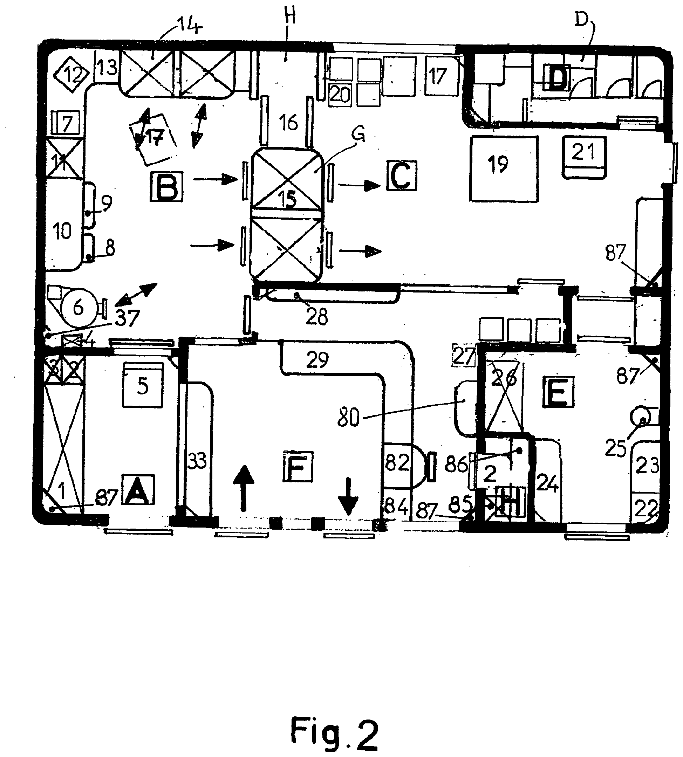

Les caractéristiques des premier et second dispositifs vont être décrites en regard des figures 2 à 7 qui suivent.

En particulier, les moyens de réception ainsi que leurs moyens de déplacement vont être décrits en étant utilisés dans un atelier, par exemple un fournil.

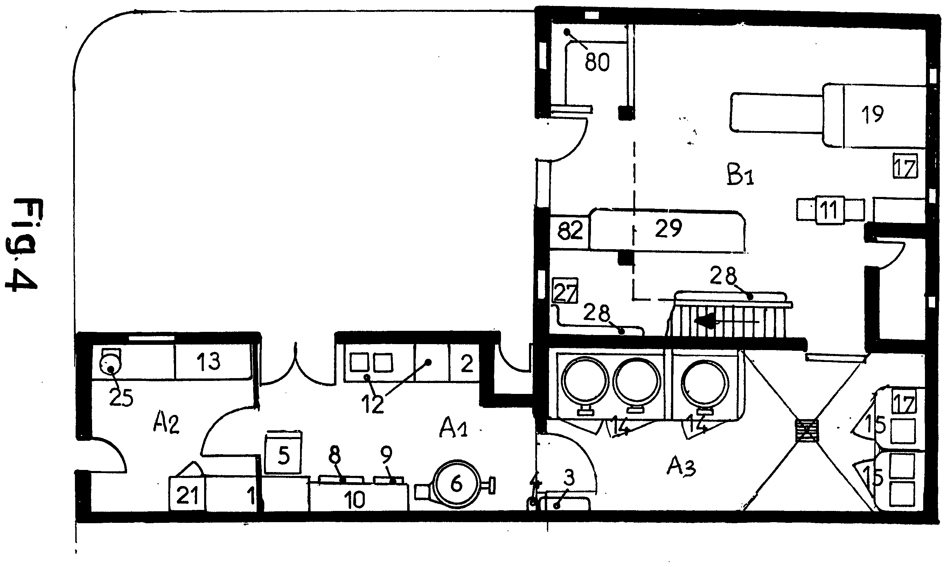

Les locaux de travail d'un tel atelier fournil peuvent consister en un local de stockage de la substance pâteuse, un local de travail mécanique de la substance pâteuse, un local de fermentation où s'effectuent les pétrissages et fermentations successives, pré-division et division, un local de conservation, de régulation des débits et d'apprêt et un local de scarification et de cuisson de ladite substance avec un second dispositif de cuisson. Un ou des locaux précités pouvant être intégrés dans un autre en formant alors ledit espace temporairement fermé. Les figures 2 et 4 illustrent deux modes de réalisation de l'atelier qui seront ultérieurement décrits. L' atelier de fournil boulanger de transformation d'une substance pâteuse, notamment une pâte à base de farine, en produit fini, comprend plusieurs locaux de travail, chaque local de travail accueillant au moins une étape du procédé de transformation de la substance pâteuse.

Cet atelier est caractérisé en ce qu'au moins un paramètre d'ambiance d'un local donné ou d'un espace temporairement fermé se trouvant dans ledit local donné est régulé en fonction de l'étape ayant lieu dans ce local ou dans cet espace temporairement fermé, des moyens de réception et/ou des moyens de déplacement de la substance pâteuse étant communs à plusieurs locaux de travail de l'atelier.

Par espace temporairement fermé, il est entendu un espace avantageusement clos par rapport au local le contenant avec au moins un passage entre local et espace, ce passage pouvant être temporairement fermé en vue d'une isolation thermique ou d'atmosphère de l'espace par rapport au local. Ceci est, par exemple, illustré par l'atelier montré à la figure 2, pour lequel le local de fermentation est sous la forme de deux chambres de fermentation 14 fermées et contenues dans le local B effectuant l'étape de pétrissage comme travail mécanique de la substance pâteuse.

Le paramètre d'ambiance régulé peut être la température, l'hygrométrie, un paramètre d'émission d'une onde électromagnétique, par exemple la luminosité ou l'ambiance acoustique, la pression et/ou la concentration d'un élément contenu dans l'atmosphère régnant dans ledit local donné ou dans l'espace temporairement fermé se trouvant dans ledit local donné, de même que la pression atmosphérique régnante. Ainsi, de manière générale, il est possible que le paramètre régulé soit une onde électromagnétique de tout type, par exemple rayonnement infrarouge ou ultraviolet. La luminosité peut par exemple concerner le type d'éclairage et sa puissance tandis que l'ambiance acoustique peut concerner l'émission de sons, d'ultrasons. Il est aussi possible de réguler simultanément plusieurs paramètres d'ambiance.

La figure 2 montre le plan d'un atelier. Cet atelier est composé de huit locaux A, B, C, D, E, F, G et H, dont tous ne sont pas des locaux de travail pour la transformation de la substance pâteuse. Ces locaux sont avantageusement climatisés et régulés en température. Ils peuvent être disposés en enfilade ou, comme montré à la figure 2, ils peuvent former deux rangées respectivement A, F, E et B, H, G, C, D, ces deux rangées étant sensiblement parallèles.

Le local de stockage A peut correspondre à l'étape P1 du procédé illustré par la figure 1 et reçoit les pulvérulents et liquides, par exemple de l'eau filtrée et refroidie et des ingrédients de base pour la fabrication de la substance pâteuse, principalement de la farine ou différentes sortes de farine dans le cas de la fabrication du pain.

La température de ce local A est à environ 16°C et sa surface au sol est de 10 m2. La référence 1 indique le lieu de stockage des farines, avantageusement conditionnées en sac de 25 à 35kg ainsi que d'autres produits sous forme de poudres. Ce local A comprend un réfrigérateur 2, un refroidisseur d'eau 3, un filtre à eau 4, une table 5 élévatrice roulante à farines pour le transport des sacs, par exemple vers le local B.

Le local de travail mécanique B de la substance pâteuse en vue de sa fermentation peut correspondre à l'étape P2a du procédé illustré par la figure 1 et forme le local de fabrication des pâtons préformés. Dans ce local B, un travail mécanique est effectué sur la substance pâteuse combiné à une fermentation de ladite substance.

La température de ce local B est à environ 23°C et sa surface au sol est de 30 m2. A ce local de travail mécanique B est intégré un groupe de deux chambres de fermentation 14 assimilable à un local de fermentation alors partie du local B en tant qu'espace temporairement fermé.

Le local de conservation et d'apprêt G peut correspondre à l'étape P2b du procédé illustré par la figure 1 et sert au passage et/ou au stationnement des pâtons préformés fabriqués. La température de ce local G peut varier entre 2 et 30°C et sa surface au sol est supérieure ou égale à 8 m2. Le local G est intercalé entre les locaux B et C. Il communique, d'un côté, avec le local B de travail mécanique de la substance pâteuse et, de l'autre, avec le local C de cuisson.

Le local de cuisson C peut correspondre à l'étape P2c du procédé illustré par la figure 1 et comprend le four de cuisson pour l'obtention des produits finis. La température de ce local C est entre 30 et 40°C, préférentiellement environ 33°C et sa surface au sol est de l'ordre de 35 m2.

Ces locaux B, G et C sont les locaux dans lesquels est effectuée la transformation de la substance pâteuse et la régulation d'au moins un paramètre ambiant s'applique à au moins un de ces locaux. Leur équipement et fonctionnement seront mieux détaillés ultérieurement après mention des autres locaux de l'atelier montrés à la figure 2.

Le local E, pouvant correspondre à l'étape P4 du procédé illustré par la figure 1, est le local laboratoire pâtisserie. La température de ce local E est à environ 16°C et sa surface au sol est de 13 m2.

Ce local E laboratoire de pâtisserie comprend un lave vaisselle 22 professionnel, une plonge 23, un tour 24 réfrigéré avec laminoir, dispositif de pesage et divers petits matériels. Le local E comprend un pétrisseur batteur mélangeur fermenteur réacteur planétaire 25 présentant au moins une cuve de capacité de 20 et 40 litres ainsi qu'un local de stockage 26 des farines.

Le local F, pouvant correspondre à l'étape P3 du procédé illustré par la figure 1, est le local vente ou boutique. La température de ce local F est à environ 23°C et sa surface au sol est de 35 m2. Le local de vente F comprend une coupeuse de pain 27, un présentoir de pains 28, une vitrine réfrigérée 29 à pâtisserie et à glace et une vitrine 80 à confiserie, un meuble vitrine 81 à desserts glacés, une caisse 82, un décor 83 et un plan rabattable 84.

La vitrine réfrigérée 29, la caisse 82 et le plan rabattable 84 délimite dans ce local F un espace dans lequel sont entreposés le présentoir à pains 28 et la coupeuse de pain. Cet espace est l'espace de travail pour le ou les vendeurs travaillant dans le local de vente F. Cet espace de travail du local de vente F communique avec le local de travail mécanique B de la substance pâteuse, le local de pâtisserie E et surtout avec le local de cuisson C pour son approvisionnement en produits finis.

Alternativement, ce local F peut être aussi séparé du reste de l'atelier de transformation de la substance pâteuse, par exemple en étant aménagé en centre ville, le reste de l'atelier étant installé en périphérie de ladite ville.

Deux locaux annexes peuvent aussi être prévus.

Le local D est le local annexe des sanitaires et douches. La température de ce local D est à environ 23°C et sa surface au sol est de 6,5 m2.

Le local H le local bureau. La température de ce local H est à environ 23°C et sa surface au sol est supérieure ou égale à 2,5 m2. Il peut contenir des équipements de nettoyage de l'atelier.

La totalité de l'atelier présente une surface au sol de 140 m2 avec un faux plafond éclairant et isolant thermiquement à environ 2,40 m de hauteur sauf en local cuisson C pour une hauteur totale inférieure à 5,20 m, pour lequel local ledit le faux plafond n'a pas besoin d'exister. Cela permet par le local de cuisson sans faux plafond un accès par échelle, escalier, monte-charge, ascenseur ou passerelle au faux-plafond qui est prévu afin d'assurer l'accès à l'entretien technique des différentes utilités notamment des systèmes de climatisation, d'humidification, de régulation de pression/dépression, de filtrage, de ventilation, d'aspiration etc..., ces utilités et systèmes étant avantageusement aménagés dans le faux-plafond pou l'hygiène des locaux.

Dans la plupart des locaux de l'atelier, particulièrement les locaux A, B, G, C dans lesquels la substance pâteuse est respectivement stockée, travaillée pour fermentation, reposée ou cuite, les différentes arrivées et départs des utilités par exemple l'eau, l'électricité, l'installation de climatisation, la cheminée, l'aspiration centralisée et la ventilation sont assurées sous des cloisons d'angle 87 cache équipement, par exemple fils électriques, gaines d'aspiration, prises électriques, ceci pour obtenir des locaux avantageusement sans câble visible et autres aspérités apparentes afin de favoriser leur entretien et leur ergonomie et ainsi d'éviter les inhalations des dangereuses poussières de farine nuisible à la santé.

Pour éviter les déperditions de chaleur, au moins un local est équipé d'au moins un sas thermique et/ou d'au moins une porte isolée à ouverture et fermeture rapides. La ou les portes isolantes sont avantageusement à ouverture et fermeture automatiques.

Chaque local dans lequel une action spécifique de travail, est effectuée, par exemple les locaux B, G, C et E, est muni des équipements nécessaires pour la réalisation de ce travail. Ainsi, des moyens de réception et/ou des moyens de déplacement de la substance pâteuse sont prévus dans l'atelier en étant communs à plusieurs locaux de l'atelier.

De manière générale, le local B comprend un pétrin fermenteur 6 avec un outil pré-diviseur pouvant être étant associé au moins temporairement audit pétrin, en version de préférence à trois cuves montées sur un chariot respectif, une balance 7 à adjuvants, un bac 8 à sel, un bac 9 à farine, une table 10 à pré-pâtons, et un outil diviseur 11 pour pâtons préformés. Le local B comprend aussi un bloc évier 12 lave-vaisselle, un tour réfrigéré 13 et deux chambres 14 pour pratiques des fermentations successives en masse avec avantageusement une hygrométrie contrôlée en fonction de la pression atmosphérique. Ces deux chambres 14 forment un espace temporairement fermé du reste du local B comme précédemment mentionné.

Dans ce local B est montré un chariot 17 de cuisson et de stockage des pâtons préformés, formant les moyens de déplacement. Ce chariot est mobile dans ce local B de même que dans les locaux G et C qui vont être décrits.

Par exemple, le local B de travail mécanique de la substance pâteuse est équipé d'un pétrin fermenteur 6 en version à au moins une cuve. Celle-ci est avantageusement disposée sur un chariot amovible pour faciliter son déplacement et le pétrin fermenteur est muni d'un outil pré-diviseur interchangeable pour l'obtention de pré-pâtons. La ou les cuves sur chariot peuvent ainsi être amenées et stockées dans les chambres de fermentation 14 en étant remplies de la substance pâteuse pour des fermentations lentes successives par exemple à 12°C à température et/ou hygrométrie contrôlées, avantageusement avec apport d'un gaz de valorisation tel que l'air, l'oxygène, l'ozone avec ou sans ions négatifs ajoutés, cet apport étant réalisé par séquences ponctuelles très courtes et dégazage du CO2 contenu dans la substance pâteuse.

La durée restante de la fermentation peut s'effectuer sans ventilation ou à très faible ventilation pour éviter le croûtage. Avantageusement, la luminosité et l'ambiance vibratoire et/ou musicale formant l'ambiance acoustique peuvent être contrôlées, ceci dans des chambres de fermentation 14 à dimensions appropriées avec une température variant de 4 à 21°C.

Il est possible et recommandé de remettre les cuves de substance pâteuse fermentée fabriquant leur propre levain pâteux sur le pétrin fermenteur 6 pour une séquence de pétrissage de quelques minutes pour assumer un rafraîchi en vitesse lente de rotation de ou des outils de travail et/ou en vitesse lente de rotation de la cuve quand celle-ci est prévue tournante afin d'assurer les phases délicates de dégazage du CO2 en substance pâteuse, d'incorporation de nouvelles micro bulles d'air en pression ou en aérobie accompagné ou non de gaz de valorisation pouvant être aromatisé avec, le cas échéant, un bassinage d'eau pulvérisé et un apport de farine et/ou d'adjuvants pour une meilleure relance fermentaire de la substance pâteuse en chambre dont le temps de pousse dépend à chaque cycle principalement de la température, de la pression régnant dans la cuve et de son taux d'humidité, ce qui augmente la production de micro-organismes aromatiques bénéfiques à la santé.

A titre d'exemple, un minimum de deux à trois cycles de fermentations successives avec rafraîchis en masse correspond à une bonne valorisation pour avoir une bonne substance pâteuse à levain fermentée avant pré-division en pré-pâtons et division en pâtons formés.

Alternativement, dans le cas où il ne peut pas être prévu d'étapes de rafraîchi auquel cas la substance pâteuse est avantageusement stockée dans une chambre de fermentation, par exemple en bacs, à une température plus basse de l'ordre de 8°C pour toutefois conserver moindrement l'avantage des fermentations en masse.

Ainsi, la cuve correspond aux moyens de réception de la substance pâteuse et des moyens de déplacement de la substance pâteuse étant communs à plusieurs locaux de l'atelier sont aussi prévus. Tous les déplacements de la cuve du local B aux chambres de fermentation 14 et inversement ainsi que les déplacements des pâtons après leur division du local B vers le local G s'effectuent sur des moyens de déplacement 17 respectivement de la cuve et/ou d'au moins une sole portant les pâtons, ces moyens 17 pouvant être une échelle ou un chariot adapté pour supporter la cuve et/ou recevoir au moins une sole portant les pâtons. Cette échelle ou ce chariot 17 peut avantageusement être muni de roulettes.

Cette échelle ou ce chariot 17 peut aussi être adapté pour transporter les pâtons du local G au local de cuisson C. Dans ce cas, il est prévu que l'échelle ou le chariot reçoive au moins une sole, avantageusement légère et électrifiée pour le support des pâtons. Ainsi, une échelle ou un chariot 17 peut être récupéré dans le local C des cuissons, ce moyen de transport ayant servi lors d'une cuisson précédente, et ensuite réutilisé dans le local B ou dans le local G.

Comme précédemment indiqué, la cuve du pétrin fermenteur 6 peut être séparée de la partie du pétrin fermenteur 6 la supportant et formant le socle dudit pétrin pour être conduite par un moyen de déplacement 17 en chambre de fermentation 14 puis remise en place plus tard sur le socle du pétrin fermenteur 6 pour que la substance pâteuse soit encore retravaillée ou que la substance pâteuse soit pré-divisée en pré-pâtons.

L'opération de pré-division en pré-pâtons de la substance pâteuse peut s'effectuer dans la cuve du pétrin fermenteur 6 avec ou sans un démontage spécifique complet de l'outil de travail, avantageusement sous forme d'un bras plongeant dans la cuve avec ou sans racloir.

Pour ce faire, l'outil de travail du pétrin fermenteur est avantageusement porté par un premier couvercle recouvrant l'ouverture de la cuve du pétrin fermenteur lors du travail mécanique sur la substance pâteuse dans ladite cuve tandis que l'outil pré-diviseur est avantageusement porté par un second couvercle. Ces premier et second couvercles présentent les mêmes dimensions, ce second couvercle remplaçant le premier couvercle du pétrin fermenteur 6 pour la mise en action de l'outil pré-diviseur.

Le pétrin fermenteur 6 porte ainsi simultanément les deux couvercles, l'un étant en position de travail sur l'ouverture de la cuve et l'autre en position d'attente en étant à un niveau supérieur au niveau de l'ouverture de la cuve et non superposé à ladite ouverture, les couvercles étant interchangeables par coulissement du couvercle en position de travail dans un plan perpendiculaire à l'ouverture de la cuve puis pivotement dudit couvercle dans un plan parallèle à l'ouverture de la cuve, l'autre couvercle remplaçant ledit couvercle par pivotement dans un plan parallèle à l'ouverture de la cuve et coulissement vers le bas le rapprochant de ladite ouverture afin de la recouvrir.

Avantageusement, le pétrin fermenteur 6 comprend une première colonne portant le premier couvercle avec l'outil de travail, sous forme d'un bras de pétrissage et une seconde colonne portant, par l'intermédiaire d'un second couvercle, l'outil pré-diviseur. Les première et seconde colonnes peuvent coulisser parallèlement dans une direction perpendiculaire au plan de l'ouverture de la cuve, par exemple pour surélever leur couvercle respectif par rapport à la cuve quand celui-ci doit être enlevé de sa position de travail de recouvrement de la cuve. Alternativement, les premier et second couvercles coulissent par rapport à leur colonne respective maintenue en position fixe.

Avantageusement, l'outil pré-diviseur découpe en pré-pâtons de 5 à 20 Kg la masse de substance pâteuse stockée dans la cuve concernée du pétrin fermenteur 6. En complément, il est possible aussi d'utiliser une diviseuse hydraulique 11 ou similaire pour obtenir des pâtons, de préférence formés sans avoir besoin d'être façonnés et de les répartir sur au moins une sole ou une plaque d'une échelle ou d'un chariot 17 à roulettes pour emporter les pâtons dans une chambre de conservation et d'apprêt 15, celle-ci étant dans le local de conservation, de régulation des débits et d'apprêt G selon les températures programmes.

De préférence, comme montré à la figure 2, le local de cuisson C est proche du local de conservation et d'apprêt G et communique avec ce dernier par des portes d'entrée et de sortie réalisant avantageusement une bonne isolation thermique entre les deux locaux. Il en va de même pour le local de travail de la substance pâteuse B de l'autre côté du local G.

Ce local G comprend avantageusement deux chambres de conservation, de régulation des débits et d'apprêt 15, de température variant de 2 à 30°C. Chacune des chambres 15 peut contenir plus d'une échelle ou un chariot à roulettes 17 portant les pâtons, avantageusement deux échelles ou chariots. Il est prévu deux portes par chambre 15, l'une débouchant en local B et l'autre en local C. Il est prévu aussi un sas thermique 16 pour la communication avec le local technique auxiliaire H, celui-ci contenant par exemple une armoire pour équipements de nettoyage, pouvant contenir des balais et aspirateurs.

Le local de cuisson C est équipé d'un four 19 pour la cuisson des pâtons, ce four 19 pouvant accueillir en son intérieur une échelle ou un chariot 17. Ce four 19 est à fort volant thermique, avantageusement équipé d'au moins une sole en matériau réfractaire, de préférence reliée au four, à l'échelle ou au chariot 17, la cuisson de ce four 19 étant à chaleur descendante. Ceci peut être réalisé à l'aide d'une programmation semi-automatique ou automatique en suivant une recette pré-établie.

Ainsi, le four 19 peut être piloté par un ou des programmes de chauffe ultrarapide avec maintien de la température de la sole à l'intérieur du four, le cas échéant combiné au chauffage de la voûte et des parois du four, et un ou des programmes de cuisson à chaleur descendante. Ainsi, par un automatisme approprié, il est laissé à l'utilisateur du four, de multiples programmes/recettes préétablies avec des températures et des durées différentes selon les phases de cuisson, les recettes et les poids à cuire avec commande de fonctions annexes, par exemple des durées de cycle de buée etc..., cette nouvelle technologie de soles étant applicables aussi au four de cuisine.

Le four 19 peut être avantageusement équipé d'un système d'aromatisation en four pour donner aux pains cuits une bonne odeur ainsi que le cas échéant transmettre les effluves aromatiques au local de vente F ou à l'extérieur de l'atelier afin d'attirer les clients.

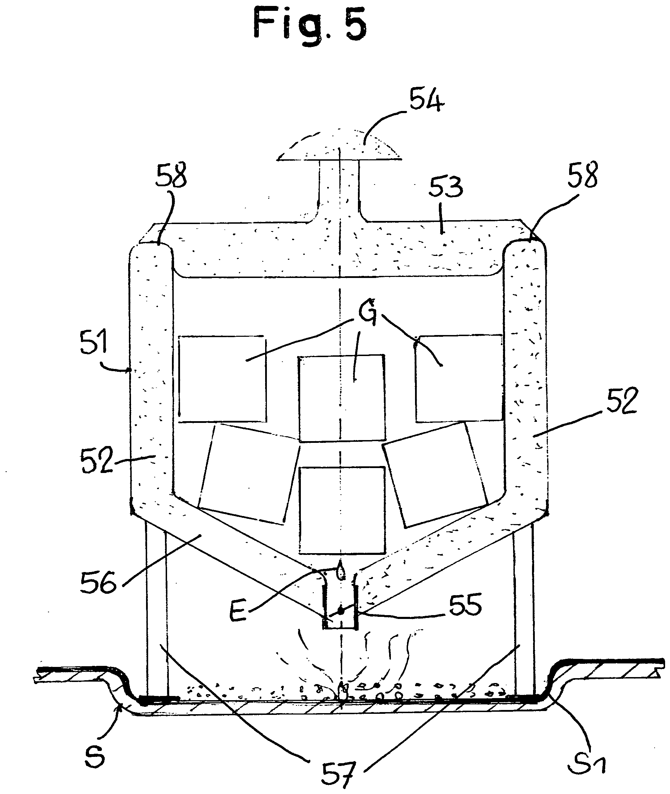

Le mélange aromatique du système d'aromatisation peut être constitué de sciure ou de bûchettes à essence de bois noble tel que genévrier ou bois fruitier, une partie du mélange s'échappant en buée lors du contact du mélange avec un élément émis par le système d'aromatisation, par exemple de l'eau très chaude ou de la buée. Un exemple d'un tel système d'aromatisation est illustré à la figure 5.

Il a été constaté que c'est lors de l'envoi de buée que les arômes se fixent sur les pains en leur donnant en plus une belle couleur dorée. Par contre, la cuisson directe avec une grande quantité de bois est interdite en raison du taux de benzopyrène dégagé.

En alternative, le système d'aromatisation peut aussi consister en la diffusion de buée préalablement aromatisée. Le four 19 est alors doté d'un système d'arrivée de buée aromatisée avec une régulation appropriée et éventuellement l'adjonction d'une commande manuelle en façade comme sur les fours de boulangerie, la programmation pouvant être avantageusement dotée de phases d'apprêt et de conservation par refroidissement.

Pour le transport des pains cuits du local de cuisson C au local de vente F, il peut être prévu une panetière en osier à roulettes. En alternative, l'échelle ou le chariot 17 précédemment mentionné pour le transport d'au moins une sole peut être utilisé. Le local de cuisson C contient aussi un four ventilé 21 pour la cuisson de produits dérivés comme des viennoiseries ou pour une phase de stockage et de ressuage 21.

Ce four 19 peut être de plusieurs types, de préférence de type à cellule à chariot non rotatif avec au moins une sole avantageusement légère et dotée d'une résistance linéaire. Dans un four de cuisine il est utilisé de préférence une sole et dans un four de fournil il est utilisé plusieurs soles. Cette résistance est à montée de température ultra-rapide vers 200°C environ, pour le saisissement des pâtons, cette résistance étant réalisée par exemple par sérigraphie ou par dépôt d'une résistance carrée obtenue par le biais d'un film en couche mince ou épaisse. La voûte et les parois du four peuvent aussi être dotées de cette technique de chauffe.

Une telle sole peut être en un matériau à absorption de chaleur élevée, par exemple en aluminium, en cuivre ou en acier inoxydable de l'ordre de 15 ou 20/10 et peut, en partie supérieure, avoir de préférence un revêtement anti-adhérent tel que céramique poreuse, émail, quasi-cristaux ou bien encore PTFE et silicone.

La sole peut avantageusement être aisément connectée ou déconnectée du four 19 par des broches coopérant avec un élément du four. Alternativement, la sole peut être coulissante sur une échelle ou un chariot 17 s'encastrant avec des broches en fond de four 19. Ceci peut aussi être fait par l'intermédiaire de rails ou d'un autre système de guidage au sol ou en hauteur, voire sur les côtés à l'intérieur du four 19 de cuisson.

La sole, pouvant être préchauffée, dispose avantageusement de crans pour son maintien aux trois/quart sortie du four porte ouverte afin de pouvoir aisément disposer en toute sécurité sur sole chaude les pâtons et, le cas échéant, le système à buée avant enfournement. La sole peut aussi être une sole réservoir à eau double peau, pouvant diffuser de la buée avec un système approprié.

Le four 19 peut aussi être de type rotatif ou à étages ou sous la forme d'un four à sole tournante en matériau réfractaire ou sole montée sur un chariot rotatif.

Lors de cuisson sur des types de four, une échelle ou un chariot 17 peut aussi être utilisé, cette échelle ou ce chariot 17 étant avantageusement en structure d'aluminium, léger et à roulettes, doté de plaques ou filets de préférence revêtus de différentes matières anti-adhérentes favorables et compatibles ave la nature vivante des pâtons telles que quasi-cristaux, céramique poreuse, hydroxyle apatite poreux, émail, silicone.

Le cas échéant, en four à sole tournante, la voûte du four peut être à hauteur différenciée, par exemple en forme de colimaçon, avec une hauteur de voûte plus faible en entrée et progressivement plus haute en sortie pour pouvoir cuire en chaleur descendante. La voûte du four est avantageusement en matériau réfractaire.

Pour ordre d'idée, une cuisson à température dégressive de 240°C à 180°C dure entre 20 et 40 minutes selon le poids des pâtons, la température et le volant thermique du four et des soles de cuisson.

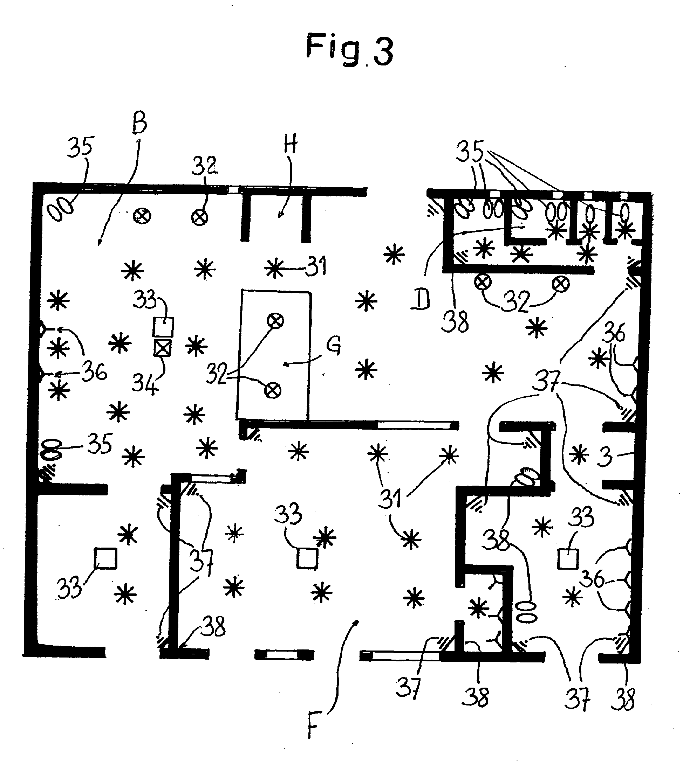

La figure 3 montre les équipements auxiliaires prévus dans l'atelier et leur positionnement dans chacun des locaux, ces équipements auxiliaires ne participant directement au travail de la substance pâteuse mais aidant à réaliser ce travail dans de bonnes conditions.

Ces équipements consistent en des éclairages 31 avec leur commande 37, des caches 38 câbles électriques et/ou gaines d'aspiration et/ou prises électriques, avantageusement sous la forme de cloisons d'angle 87 cache équipement montrées à la figure 2. D'autres équipements sont constitués par des arrivées électriques 32, des arrivées d'eau 36 des arrivées de gaines de climatisation 33, des humidificateurs 34 et des prises électriques 36.

La figure 4 montre un second mode de réalisation de l'atelier. Cet atelier comprend un local B1 de vente effectuant la même fonction que le local F de la figure 2 sans avoir la même forme que celui-ci.

Ce second mode de réalisation consiste essentiellement en l'incorporation dans le local de vente B1 des équipements nécessaires pour des opérations telles qu'une partie de la division en pâtons, cette division s'effectuant en fin d'étape P2a du procédé selon la figure 1.

Ce local B1 présente une superficie d'environ 60 m2 climatisé à environ 23°C. En commun avec le local de vente F décrit à la figure 2, le local B1 comprend une coupeuse à pain 27, un présentoir à pain 28 et deux vitrines 29 et 80 dont au moins l'une 29 est réfrigérée. En commun avec le local de cuisson C décrit à la figure 2, le local B1 comprend un four 19 et des moyens 17 de déplacement des pâtons recevant au moins une sole. En commun avec le local de travail mécanique de la substance pâteuse B décrit à la figure 2, le local B1 comprend une diviseuse 11 en pâtons.

Il est aussi équipé d'une mezzanine d'environ 12m2 pouvant servir par exemple de bureaux et de stockage, le mur de cette mezzanine avec le local B1 étant illustré en pointillés à la figure 4.

Ainsi, les opérations de cuisson et de division des pâtons se déroulent avantageusement à la vue de la clientèle. L'agencement de l'atelier en figure 4 présente aussi une possibilité de terrasse T d'accueil aménageable. L'atelier présente alors une forme en deux branches perpendiculaires, la terrasse T ayant un côté latéral adjacent à la première branche et un côté longitudinal adjacent à la seconde branche, la première branche étant composée par le local de vente B1 et la seconde branche composée de trois locaux A1, A2 et A3 qui vont maintenant être décrits.

Les trois locaux A1, A2 et A3 se suivent en formant la seconde branche, le local A1 étant intercalé entre les locaux A2 et A3, un local donné communiquant avec le ou les locaux voisins immédiats. Le dernier local A3 qui est disposé en bout interne de la seconde branche communique en outre avec le local de vente B1. La seconde branche est de surface au sol d'environ 60 m2 et est avantageusement climatisée.

Le local A1 de la figure 4 correspond sensiblement au local de travail mécanique de la substance pâteuse B montré à la figure 2. Ce local A1 comprend essentiellement un pétrin-fermenteur 6, un bac à sel 8, un bac à farine 9, une table à pré-pâtons 10 et un bloc évier lave-vaisselle 12.

Le local A1 contient en plus les équipements relatifs à un réfrigérateur 2 et une table 5 élévatrice roulante à farine, ces équipements étant montrés dans le local de stockage A de la figure 2.

Le local A2 contient les équipements suivants : un pétrisseur batteur mélangeur fermenteur réacteur planétaire 25, précédemment montré dans le local de pâtisserie E de la figure 2, un tour réfrigéré 13, précédemment montré dans le local de travail mécanique de la substance pâteuse B de la figure 2, un stockage de farines 1, précédemment montré dans le local de stockage A de la figure 2 et un four ventilé 21 pour viennoiseries, précédemment montré dans le local de cuisson C de la figure 2. La température des locaux A1 et A2 est avantageusement régulée entre 15 et 25°C.

Le local A3 contient un refroidisseur d'eau 3, un local de fermentation avec trois chambres de fermentation 14 constituant un premier espace temporairement fermé intégré dans ce local A3, un local de conservation et d'apprêt avec deux chambres de conservation et d'apprêt 15 constituant un second espace temporairement fermé intégré dans ce local, et des moyens de déplacement 17 des pâtons préformés.

Alternativement, ce local A3 peut accueillir la diviseuse 11 disposée dans le local B1, ce qui serait un positionnement plus logique pour de cette diviseuse 11 mais occulterait l'opération de division de la vue des clients se tenant dans le local B1.

Toutes les opérations effectuées dans ces locaux A1 à A3, B1 peuvent être régulées à des températures et sur des durées de traitement différentes. Les chambres de fermentation 14 peuvent intégrer des chariots ou échelles à roulettes avec cuve contenant la substance pâteuse à laisser fermenter, tandis que les chambres de conservation, régulation et apprêt 15 peuvent intégrer des chariots 17 ou échelles à roulettes intégrant au moins une sole ou une plaque portant les pâtons préformés.

D'autres variantes peuvent être réalisées et notamment la séparation de l'atelier en deux groupes à distance l'un de l'autre, en ayant les locaux A1 à A3 en zone défavorisée à l'extérieur de la ville et le local B1 bien placé en centre-ville, avec l'approvisionnement des chariots ou échelles en pâtons effectué par transport par véhicule entre les deux groupes de locaux A1 à A3 et B1.

La figure 5 montre une sole S à pâtons présentant, d'une part, une portion S1 de forme concave remplie d'une substance aromatique. D'autre part, la sole S supporte un bac 51 à glaçons G. Le bac 51 est disposé au dessus de la portion S1 et est supporté par la sole S par l'intermédiaire de pieds 57 en appui sur les parties d'extrémité de la portion de forme concave S1 de cette sole S.

Ce bac 51 comprend une paroi 52 latérale isolante et résistante à la chaleur ainsi qu'un couvercle 53 avantageusement isolé thermiquement. Ce couvercle 53 est doté avantageusement sur sa face supérieure d'une poignée 54 aidant à sa manutention pour son enlèvement et sa mise en place sur la paroi latérale 52 du bac 51. Un joint d'étanchéité thermique 58 est avantageusement intercalé entre partie supérieure de la paroi latérale 52 et partie inférieure de la périphérie du couvercle 53, ladite partie inférieure de la périphérie du couvercle 53 étant en appui et reposant contre la partie supérieure de la paroi 52.

Le bac 51 présente sensiblement une forme d'entonnoir pointant vers la sole S et notamment ladite forme concave S1 aménagée à sa surface. La base 56 du bac 51 présente une ouverture médiane 55 dirigée vers la partie médiane de la forme concave S1 de la sole S et se trouvant au dessus de celle-ci.

De par la chaleur se dégageant du four en général et de la sole S en particulier, les glaçons G contenus dans le bac 51 fondent progressivement et des gouttes d'eau E peuvent passer par l'ouverture 55 médiane du fond 56 du bac 51 pour tomber par gravité en goutte à goutte sur la portion S1 concave de la sole S.

Dans la portion S1 de forme concave de la sole S peut être contenue une substance aromatique, du type précédemment mentionné. Les gouttes E d'eau issues du bac 51 se transforment en buée au contact de la sole S chauffée, buée qui contient de la substance aromatique ainsi évaporée.

Alternativement ou en complément, l'eau destinée à former les glaçons G fondant lentement a pu être préalablement aromatisée à une substance odorante quelconque, par exemple à la fleur d'oranger ou à des essences de fruitiers ou de miel ou à d'autres essences naturelles, auquel cas la présence d'une substance aromatique dans la portion S1 et même cette portion n'ont plus lieu d'être.

En alternative et/ou en complément à une substance aromatique, la forme concave S1 peut contenir aussi une matière, qui après mélange avec l'eau des gouttes transformée en buée peut donner une belle coloration aux pains cuits dans le four.

Dans les deux cas, les gouttes d'eau tombantes du bac se vaporisent avec la substance contenue dans la forme concave S1 de la sole et permettent d'aromatiser ou de colorer le contenu du four. Accessoirement, la buée aromatisée ainsi formée peut servir à aromatiser l'atelier, par exemple un fournil ou une cuisine, notamment le local de vente comme montré aux figures 2 et 4 respectivement sous la forme du local F ou du local B1 ou l'extérieur immédiat de l'atelier.

Le diamètre de l'ouverture 55 du bac 51 est calculé afin que l'échappement d'eau par l'ouverture 55 soit étalé dans le temps. Accessoirement, le débit de cette ouverture 55 peut être régulé par un mini robinet de réglage du goutte à goutte, ce réglage pouvant se faire par automatisme.

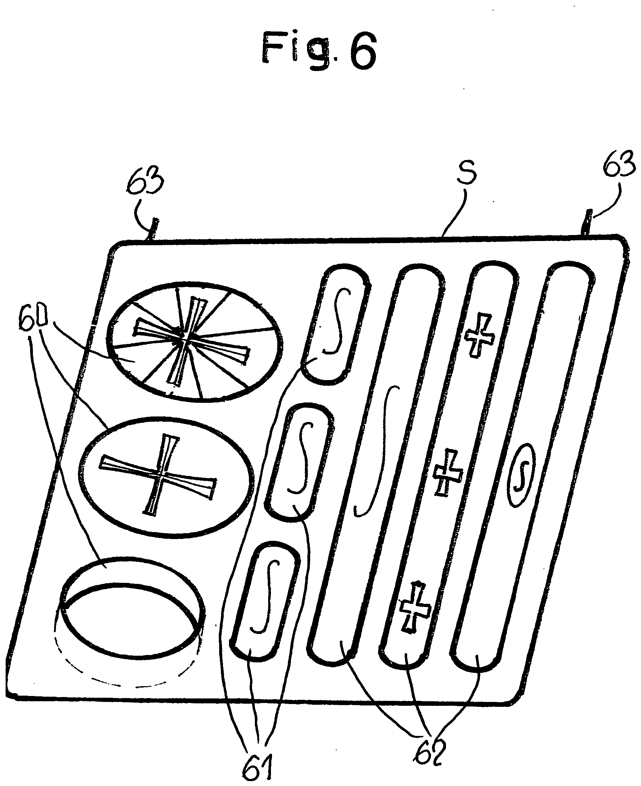

La figure 6 illustre une sole S portant des formes concaves de réception 60 à 62 pour le positionnement des pâtons de plusieurs formes sur ladite sole S et une forme saillante sur chaque forme concave de réception 60 à 62 permettant lors de la cuisson de laisser une empreinte et/ou une marque sur les pâtons. Cette empreinte et/ou marque peut, par exemple, être un S avec la forme saillante portée par la forme concave de réception 61 de réception d'un pâton ou une croix ou un autre symbole.

Ces formes concaves de réception 60 à 62 sont adaptées au poids et à la morphologie des pâtons, par exemple de forme allongée, en forme de couronne ou autres, avec des formes concaves de réception rondes 60, des formes concaves de réception allongées 62 et des formes concaves de réception courtes 61. Ces formes concaves de réception 60 à 62 sont avantageusement fabriquées par emboutissage de la sole S, l'extrémité de l'empreinte pouvant être coupante, notamment en dents de scie.

La sole S ou en alternative, le cas échéant, son chariot de support, peut être munie de broches électriques 63 s'encastrant dans la cellule du four par un système approprié. Ceci peut être réalisé avec la paroi en fond de four, ce qui correspond à l'aménagement des broches sur la face frontale de la sole de la figure 6, ou en alternative au sol ou en hauteur par exemple par deux rails ou tout autre système de raccordement électrique.

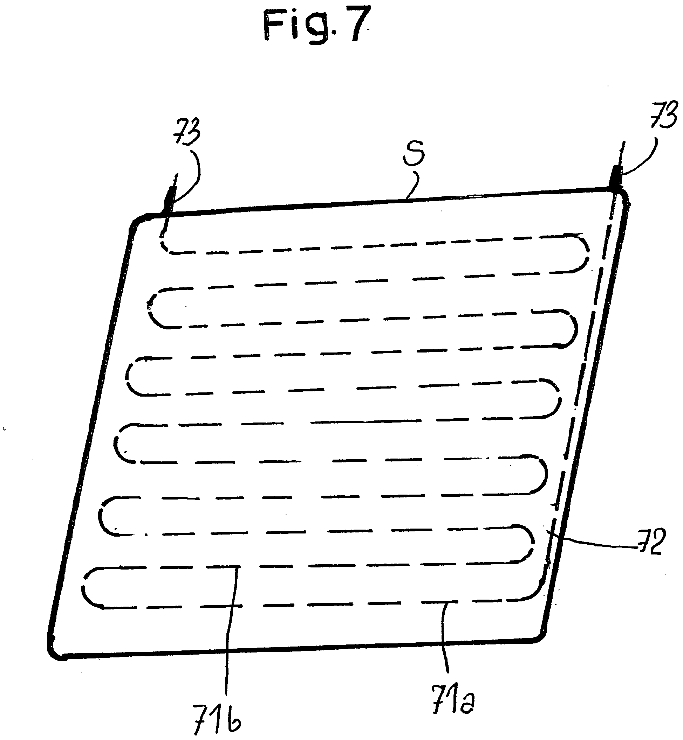

La figure 7 montre une sole S avec une résistance électrique 72 intégrée en son intérieur. Cette résistance électrique s'étend sur toute la surface de cette sole S avec plusieurs parties 71a de la résistance 72 s'étendant d'un bord latéral à l'autre bord latéral opposé de la sole S, chacune de ces parties 71a étant suivie d'une partie 71b s'étendant en sens inverse. Le chauffage de la sole ainsi obtenu peut être uniforme sur la surface de la sole S ou différencié selon l'effet de cuisson recherché.

La figure 7 montre aussi les broches 73 de contact électrique de la sole S. Dans le mode de réalisation montré à cette figure, chaque broche 73 est formée d'une fiche électrique pouvant être embrochée en fond de paroi du four.

A un endroit quelconque de la sole S, le chauffage de la sole peut être augmenté par un resserrement d'une partie 71b avec les parties 71a qui lui sont adjacentes ou bien diminué par un écartement des mêmes parties de la résistance linéaire, ce qui génère des zones de chauffe plus ou moins prononcée.

Ces soles légères peuvent par ailleurs avantageusement bénéficier de forme en bordure pour faciliter leur mise en place et leur coulissement sur les chariots, par exemple des ergots coulissant dans une rainure respective prévue dans la paroi interne du four.

Tout ce qui est relatif à la cuisson et qui a été précédemment décrit peut être adapté à un kit de cuisson pour cuisine domestique ou hôtelière en adaptant sa forme et sa taille afin d'être facilement logé dans une telle cuisine, ce kit ne faisant pas partie de l'invention.

Les secteurs principalement concernés par la présente invention sont les boulangeries pâtisseries, l'hôtellerie, les pizzerias, les cuisines domestiques et les laboratoires.

## Revendications

1. Procédé de transformation d'une substance pâteuse en produit fini alimentaire, comprenant une étape de travail mécanique (P2a) par brassage de la substance pâteuse, une étape de fermentation de ladite substance, une étape de division de la substance en pâtons suivie d'une étape de cuisson (P2c) desdits pâtons, **caractérisé en ce qu'**après une étape de fermentation, la substance pâteuse est soumise à une nouvelle étape de travail mécanique (P2a) de ladite substance au cours de laquelle sont opérées une phase de dégazage du gaz carbonique et une phase d'injection de gaz de valorisation, cette succession se produisant au moins une fois, et **en ce qu'**avant l'étape de division, la substance pâteuse est soumise à une étape de pré-division en pré-pâtons.

2. Procédé de transformation selon la revendication 1, **caractérisé en ce que**, lors de la fermentation, des phases de dégazage et d'injection de gaz de valorisation sont opérées, les phases de dégazage et d'injection de gaz de valorisation étant opérées avantageusement séquentiellement.

3. Procédé de transformation selon l'une quelconque des revendications 1 à 2, **caractérisé en ce qu'**entre les étapes de pré-division et de division, d'une part, et l'étape de cuisson (P2c), d'autre part, sont intercalées une étape de conservation, régulation des débits et d'apprêt desdits pâtons (P2b) et une étape de scarification des pâtons ainsi obtenus, et **en ce qu'**après l'étape de cuisson (P2c) à températures différentes prend place une étape de ressuage.

4. Procédé de transformation selon l'une quelconque des revendications 1 à 3, **caractérisé en ce qu'**il est procédé à une régulation, lors des étapes de travail mécanique (P2a) par brassage et de fermentation, d'au moins un paramètre d'ambiance des moyens de réception contenant la substance pâteuse comme la température, l'hygrométrie, un paramètre d'émission d'une onde électromagnétique, notamment la luminosité ou l'ambiance acoustique, la pression et/ou la concentration d'un élément contenu dans l'atmosphère régnant dans ces moyens de réception, ceci, d'une part, selon au moins un paramètre de fonctionnement en vigueur dans les moyens de réception, comme la vitesse de moyens mécaniques lors des étapes de travail mécanique, la durée des étapes de travail mécanique et/ou des étapes de fermentation, le nombre de successions d'étapes de travail mécanique et de fermentation prévues ou la place d'une étape de travail mécanique ou de fermentation dans cette succession, l'alimentation séquentielle de gaz et le type de gaz utilisé et/ou, d'autre part, selon la pression atmosphérique ou l'hygrométrie régnant à l'extérieur des moyens de réception, ou **en ce qu'**il est procédé à la régulation inverse d'au moins un desdits paramètres de fonctionnement par au moins un paramètre d'ambiance régnant dans les moyens de réception pendant les étapes de travail mécanique par brassage et de fermentation.

5. Procédé selon l'une quelconque des revendications précédentes, mis en oeuvre dans une installation se composant d'un premier dispositif pour le travail mécanique par brassage et la fermentation de la substance pâteuse et d'un second dispositif pour la cuisson de la substance pâteuse, les moyens de réception de la substance pâteuse du premier dispositif étant sous forme d'une cuve et ceux du second dispositif d'au moins une sole (S), un outil prédiviseur étant associé au moins temporairement au premier dispositif.

6. Procédé selon la revendication 5, **caractérisé en ce que** le dispositif de cuisson coopère avec un dispositif de conservation, de régulation des débits et d'apprêt de la substance pâteuse.

7. Procédé selon la revendication 5 ou 6, **caractérisé en ce que** les moyens de déplacement (17) sont sous la forme d'une échelle à roulettes ou d'un chariot roulant, portant au moins la cuve et/ou la sole (S).

8. Procédé selon l'une quelconque des revendications 5 à 7, **caractérisé en ce que** la cuve est celle d'un pétrin fermenteur (6), cette cuve étant amovible et pouvant être déplacée au moins entre travail mécanique et fermentation (14, A3).

9. Procédé selon l'une quelconque des revendications 5 à 8, **caractérisé en ce que** le pétrin fermenteur ou un appareil auxiliaire pouvant coopérer avec ledit pétrin porte un outil pré-diviseur interchangeable.

10. Procédé selon la revendication 9, **caractérisé en ce que** la cuve peut être recouverte par un couvercle, au moins par intermittence, ce couvercle étant de faible poids et légèrement poreux pour respiration gazeuse tout en évitant le croûtage.

11. Procédé selon l'une quelconque des revendications 5 à 10, **caractérisé en ce qu'**au moins un gaz de valorisation tel que l'air, l'eau sous forme de buée, l'oxygène ou l'ozone, ou un mélange de ces gaz, ce gaz ou ce mélange étant avec ou sans ions négatifs ajoutés, est introduit dans la cuve pendant les étapes de travail mécanique et/ou de fermentation (14, A3).

12. Procédé selon l'une quelconque des revendications 5 à 11, **caractérisé en ce que** le local de fermentation (14, A3) comprend au moins une chambre de fermentation (14), pour laquelle sa température, son hygrométrie et sa pression intérieure sont régulées selon une phase de dépression gazeuse pour l'évacuation du gaz carbonique hors de la chambre (14) et/ou selon une phase d'injection en séquences du gaz de valorisation et/ou selon une phase sans ou avec brassage gazeux faible.

13. Procédé selon l'une quelconque des revendications 5 à 12, **caractérisé en ce que** le dispositif de cuisson comprend un four (19) à cellule non tournante recevant un chariot ou une échelle amovible (17), au moins une sole (S) chauffante étant soit encastrée dans le four soit étant porté par le chariot ou l'échelle (17) dans ledit four, ladite sole (S) étant à chauffage électrique ultrarapide pour le saisissement entre 180°C et 240 °C des pâtons obtenus après division de la substance pâteuse fermentée, ledit chariot, ladite échelle ou la sole (S) étant connecté électriquement lors de son insertion dans la cellule du four (19) avec des températures de cuisson différentes.

14. Procédé selon l'une quelconque des revendications 5 à 13, **caractérisée en ce que** ladite sole (S) du dispositif de cuisson se compose d'une matière à dispersion thermique élevée comme l'aluminium, le cuivre ou l'acier inoxydable, présente une faible épaisseur et intègre une résistance linéaire (72) en couche épaisse avantageusement sérigraphiée avec un revêtement de protection genre quasi- cristaux ou similaire, ou une résistance par l'intermédiaire d'un film en couche mince avec un revêtement quasi-cristaux, ladite sole (S) étant munie en sa partie supérieure porte pâtons d'un revêtement poreux permettant le dégazage, tel qu'une céramique poreuse, un hydroxyle apatite en couche mince, un émail ou un revêtement anti-adhérent et résistant à la chaleur tel que silicone, PTFE ou émail, ladite sole (S) pouvant être munie ou non de micro perforations pour faciliter le dégazage des pâtons lors de leur cuisson.

15. Procédé selon l'une quelconque des revendications 5 à 14, **caractérisée en ce que** ladite sole (S) est formée d'un réservoir à double peau doté d'un système de diffusion de buée.

## Patentansprüche

1. Verfahren zum Umwandeln einer teigförmigen Substanz in ein fertiges Nahrungsmittelprodukt, umfassend einen mechanischen Arbeitsschritt (P2a) durch Rühren der teigförmigen Substanz, einen Schritt der Fermentation der Substanz, einen Schritt des Teilens der Substanz in Teiglinge, gefolgt von einem Schritt des Backens (P2c) der Teiglinge, **dadurch gekennzeichnet, dass** die teigförmige Substanz nach einem Fermentationsschritt einem neuen mechanischen Arbeitsschritt (P2a) der Substanz unterzogen wird, während dessen eine Entgasungsphase des Kohlendioxids und eine Aufbereitungsgasinjektionsphase durchgeführt werden, wobei diese Abfolge mindestens einmal auftritt, und dadurch, dass vor dem Trennschritt die teigförmige Substanz einem Voraufteilungsschritt in Vorteiglinge unterzogen wird.

2. Umwandlungsverfahren nach Anspruch 1, **dadurch gekennzeichnet, dass** während der Fermentation Entgasungs- und Aufbereitungsgasinjektionsphasen stattfinden, wobei die Entgasungs- und Aufbereitungsgasinjektionsphasen vorzugsweise sequentiell durchgeführt werden.

3. Umwandlungsverfahren nach einem der Ansprüche 1 bis 2, **dadurch gekennzeichnet, dass** zwischen den Schritten der Voraufteilung und Aufteilung einerseits und des Backschritts (P2c) andererseits ein Schritt der Konservierung, Regulierung von Fließgeschwindigkeiten und Herstellung der Teiglinge (P2b) sowie ein Schritt des Ritzens der erhaltenen Teiglinge zwischengeschaltet wird, und dass nach dem Schritt des Backens (P2c) bei verschiedenen Temperaturen ein Schritt des Ausschwitzens stattfindet.

4. Umwandlungsverfahren nach einem der Ansprüche 1 bis 3, **dadurch gekennzeichnet, dass** während der mechanischen Arbeitsschritte (P2a) durch Rühren und Fermentierung eine Regelung von mindestens einem Umgebungsparameter von Aufnahmemitteln, welche die teigförmige Substanz enthalten, stattfindet, wie Temperatur, Luftfeuchtigkeit, einem Emissionsparameter einer elektromagnetischen Welle, insbesondere die Leuchtstärke oder akustische Umgebung, der Druck und/oder die Konzentration eines in der Atmosphäre, die in diesen Aufnahmemitteln herrscht, enthaltenen Elements, einerseits gemäß mindestens einem Betriebsparameter der Aufnahmemittel, beispielsweise die Geschwindigkeit mechanischer Mittel während der mechanischen Arbeitsschritte, die Dauer der mechanischen Arbeitsschritte und/oder Fermentationsschritte, die Anzahl der Schritte in den geplanten Abfolgen mechanischer Arbeits- und Fermentationsschritte oder der Ort eines mechanischen Arbeits- oder Fermentationsschritts in dieser Abfolge, die sequentielle Gaszufuhr und die Art des verwendeten Gases, und/oder andererseits gemäß dem Atmosphärendruck oder der Luftfeuchtigkeit, die außerhalb der Aufnahmemittel herrscht, oder dadurch, dass eine umgekehrte Regelung von mindestens einem der Betriebsparameter durch mindestens einen Umgebungsparameter, der in den Aufnahmemitteln während der mechanischen Arbeitsschritte des Rührens und der Fermentation herrscht, stattfindet.

5. Verfahren nach einem der vorhergehenden Ansprüche, umgesetzt in einer Anlage bestehend aus einer ersten Vorrichtung für die mechanische Arbeit durch Rühren und Fermentation der teigförmigen Substanz und einer zweiten Vorrichtung zum Backen der teigförmigen Substanz, wobei die Aufnahmemittel der teigförmigen Substanz der ersten Vorrichtung die Form eines Behälters und die der zweiten Vorrichtung mindestens die eines Herdbodens (S) aufweisen, wobei ein Vorverteilerwerkzeug zumindest zeitweise der ersten Vorrichtung zugeordnet ist.

6. Verfahren nach Anspruch 5, **dadurch gekennzeichnet, dass** die Backvorrichtung mit einer Vorrichtung zur Konservierung, Fließkontrolle und Zurichtung der teigförmigen Substanz zusammenwirkt.

7. Verfahren nach Anspruch 5 oder 6, **dadurch gekennzeichnet, dass** die Fortbewegungsmittel (17) die Form einer Leiter mit Rädern oder eines Rollwagens aufweisen, die bzw. der mindestens den Behälter und/oder den Herdboden (S) trägt.

8. Verfahren nach einem der Ansprüche 5 bis 7, **dadurch gekennzeichnet, dass** der Behälter der eines Fermenter-Mischers (6) ist, wobei der Behälter abnehmbar ist und zumindest zwischen mechanischer Arbeit und Fermentation (14, A3) bewegt werden kann.

9. Verfahren nach einem der Ansprüche 5 bis 8, **dadurch gekennzeichnet, dass** der Fermenter-Mischer oder eine Hilfsvorrichtung, die mit dem Mischer zusammenwirken kann, ein austauschbares Vorverteilerwerkzeug trägt.

10. Verfahren nach Anspruch 9, **dadurch gekennzeichnet, dass** der Behälter zumindest zeitweise durch einen Deckel abgedeckt werden kann, wobei dieser Deckel von geringem Gewicht ist und zur Gasatmung leicht porös ist, während zugleich ein Verkrusten vermieden wird.

11. Verfahren nach einem der Ansprüche 5 bis 10, **dadurch gekennzeichnet, dass** mindestens ein Aufbereitungsgas wie etwa Luft, Wasser in Form von Dampf, Sauerstoff oder Ozon oder ein Gemisch dieser Gase, wobei dieses Gas oder dieses Gemisch mit oder ohne zugesetzte negative Ionen vorliegt, während der mechanischen Arbeits- und/oder Fermentationsschritte (14, A3) in den Behälter eingeleitet wird.

12. Verfahren nach einem der Ansprüche 5 bis 11, **dadurch gekennzeichnet, dass** der Fermentationsraum (14, A3) mindestens eine Fermentationskammer (14) umfasst, deren Temperatur, Luftfeuchtigkeit und Innendruck nach einer gasförmigen Vakuumphase zur Abführung von Kohlendioxid aus der Kammer (14) und/oder in einer sequentiellen Aufbereitungsgasinjektionsphase und/oder in einer Phase ohne oder mit schwacher Gasmischung gesteuert werden.

13. Verfahren nach einem der Ansprüche 5 bis 12, **dadurch gekennzeichnet, dass** die Backvorrichtung einen Ofen (19) mit einer nicht rotierenden Zelle, die einen Wagen oder eine abnehmbare Leiter (17) aufnimmt, umfasst, wobei die mindestens eine Herdplatte (S) entweder in den Ofen eingebettet ist oder durch den Wagen oder die Leiter (17) in den Ofen geschoben wird, wobei es sich bei dem Herdboden (S) um eine ultraschnelle elektrische Heizung zum Anbacken der nach der Teilung der fermentierten teigförmigen Substanz erhaltenen Teiglinge zwischen 180 °C und 240 °C handelt, wobei der Wagen, die Leiter oder der Herdboden (S) während des Einführens in die Ofenzelle (19) mit unterschiedlichen Backtemperaturen elektrisch verbunden sind.

14. Verfahren nach einem der Ansprüche 5 bis 13, **dadurch gekennzeichnet, dass** der Herdboden (S) der Backvorrichtung aus einem hoch wärmedispersiven Material wie Aluminium, Kupfer oder Edelstahl besteht, eine niedrige Dicke aufweist und eine lineare Widerstandsschicht (72), vorzugsweise per Siebdruck mit einer quasikristallinen oder ähnlichen Schutzschicht versehen, oder einen Widerstand mittels eine dünnen Films mit einer quasikristallinen Beschichtung enthält, wobei der Herdboden (S) im oberen Teil, der die Teiglinge trägt, mit einer porösen Schicht versehen ist, die Entgasung ermöglicht, wie etwa einer porösen Keramik, einer dünnen Schicht Hydroxylapatit, einem Email oder einem Antihaft- sowie hitzebeständigen Herdboden, wie etwa Silikon, PTFE oder Email, wobei der Herdboden (S) Mikro-Perforationen aufweisen kann oder auch nicht, um das Entgasen der Teiglinge während des Backens zu erleichtern.

15. Verfahren nach einem der Ansprüche 5 bis 14, **dadurch gekennzeichnet, dass** der Herdboden (S) aus einem Doppelwandtank mit einem Dampfdiffusionssystem besteht.

## Claims

1. A method for transforming a doughy substance into a finished food product, comprising a step of mechanical working (P2a) by brewing the doughy substance, a step of fermenting said substance, a step of dividing the substance into doughs followed by a step of baking (P2c) said doughs, **characterized in that** after a fermentation step, the doughy substance is subjected to a new step of mechanical working (P2a) of said substance during which a carbon dioxide degassing phase and a recovery gas injection phase are performed, this sequence occurring at least once, and **in that** before the division step, the doughy substance is subjected to a step of pre-dividing into pre-doughs.

2. The transformation method according to claim 1, **characterized in that**, during fermentation, degassing and recovery gas injection phases are performed, the degassing and recovery gas injection phases being performed advantageously sequentially.

3. The transformation method according to any one of claims 1 to 2, **characterized in that** between the pre-division and division steps, on the one hand, and the baking step (P2c), on the other hand, there are interposed a step of storing, flow regulating and priming said doughs (P2b) and a step of scarifying the doughs thus obtained, and **in that** after the baking step (P2c) at different temperatures a liquid-penetration step takes place.

4. The transformation method according to any one of claims 1 to 3, characterized that it is proceeded with a regulation, during the mechanical working (P2a) by brewing and fermentation steps, of at least one ambient parameter of the receiving means containing the doughy substance such as temperature, hygrometry, an emission parameter of an electromagnetic wave, in particular the luminosity or the acoustical ambience, the pressure and/or the concentration of an element contained in the atmosphere prevailing in these receiving means, this, on the one hand, according to at least one operating parameter applicable in the receiving means, such as the speed of mechanical means during the mechanical working steps, the duration of the mechanical working steps and/or of the fermentation steps, the number of sequences of mechanical working and fermentation steps planned or the place of a mechanical working or fermentation step in this sequence, the sequential gas supply and the type of gas used and/or, on the other hand, according to the atmospheric pressure or the hygrometry prevailing outside the receiving means, or in that it is proceeded with a reverse regulation of at least one of said operating parameters by at least one ambient parameter prevailing in the receiving means during the mechanical working by brewing and fermentation steps.

5. The transformation method according to any one of the preceding claims, implemented in an installation composed by a first device for the mechanical working by brewing and fermentation of the doughy substance and a second device for baking the doughy substance, the means for receiving the doughy substance of the first device being in the form of a vat and those of the second device in the form of at least one plate (S), a pre-divider tool being associated at least temporarily to the first device.

6. The transformation method according to claim 5, **characterized in that** the baking device cooperates with a device for storing, regulating the flows and priming the doughy substance.

7. The transformation method according to claim 5 or 6, **characterized in that** the displacement means (17) are in the form of a rolling ladder or a roller carriage, carrying at least the vat and/or the plate (S).

8. The transformation method according to any one of claims 5 to 7, **characterized in that** the vat is that of a fermenter kneader (6), this vat being removable and displaceable at least between mechanical working and fermentation (14, A3).

9. The transformation method according to any one of claims 5 to 8, **characterized in that** the fermenter kneader or an auxiliary apparatus that can cooperate with said kneader carries an interchangeable pre-divider tool.

10. The transformation method according to claim 9, **characterized in that** the vat can be covered by a lid, at least intermittently, this lid being lightweight and slightly porous for gaseous breathing while avoiding crusting.

11. The transformation method according to any one of claims 5 to 10, **characterized in that** at least one recovery gas such as air, water in the form of mist, oxygen or ozone, or a mixture of these gases, this gas or this mixture being with or without added negative ions, is introduced into the vat during the mechanical working and/or fermentation steps (14, A3).

12. The transformation method according to any one of claims 5 to 11, **characterized in that** the fermentation room (14, A3) comprises at least one fermentation chamber (14), for which its temperature, its hygrometry and its internal pressure are regulated according to a gaseous depression phase for evacuating carbon dioxide out of the chamber (14) and/or according to a sequential injection phase of the recovery gas and/or according to a phase without or with a low gaseous brewing.

13. The transformation method according to any one of claims 5 to 12, **characterized in that** the baking device comprises an oven (19) with a non-rotating cavity receiving a carriage or a removable ladder (17), at least one heating plate (S) being either embedded into the oven or being carried by the carriage or ladder (17) in said oven, said plate (S) being with ultra-fast electric heating for seizing between 180°C and 240°C the doughs obtained after dividing the fermented doughy substance, said carriage, said ladder or the plate (S) being electrically connected during its insertion into the cavity of the oven (19) with different baking temperatures.

14. The transformation method according to any one of claims 5 to 13, **characterized in that** said plate (S) of the baking device is composed by a high thermal dispersion material such as aluminum, copper or stainless steel, has a small thickness and integrates a linear resistance (72) in a thick layer advantageously silk-screen printed with a quasi-crystal type protective coating or the like, or a resistance via a thin-layer film with a quasi-crystal coating, said plate (S) being provided at its doughs-carrier upper portion with a porous coating allowing degassing, such as a porous ceramic, a thin-layer hydroxyapatite, an enamel or an anti-adherent and heat-resistant coating such as silicone, PTFE or enamel, said plate (S) may be provided or not with micro-perforations in order to facilitate degassing of doughs during the baking thereof.

15. The transformation method according to any one of claims 5 to 14, **characterized in that** said plate (S) is formed of a double-skin tank with a mist diffusion system.
